(19) Europäisches Patentamt
European Patent Office
Office européen des brevets

(11) Veröffentlichungsnummer: **0 507 178 A2**

(12) # EUROPÄISCHE PATENTANMELDUNG

(21) Anmeldenummer: **92104978.9**

(51) Int. Cl.[5]: **C08L 69/00**, C08K 5/54

(22) Anmeldetag: **23.03.92**

(30) Priorität: **04.04.91 DE 4110797**

(43) Veröffentlichungstag der Anmeldung:
**07.10.92 Patentblatt 92/41**

(84) Benannte Vertragsstaaten:
**BE DE ES FR GB IT NL**

(71) Anmelder: **BAYER AG**

**W-5090 Leverkusen 1 Bayerwerk(DE)**

(72) Erfinder: **Meier, Helmut-Martin, Dr.**
**Am Obersthof 3**
**W-4030 Ratingen(DE)**
Erfinder: **Westeppe, Uwe, Dr.**
**Vogelskamp 72**
**W-4020 Mettmann(DE)**
Erfinder: **Dhein, Rolf, Dr.**
**Deswatinesstrasse 30**
**W-4150 Krefeld(DE)**
Erfinder: **Constant, Dieter, Dr.**
**Ouettinger Strasse 225**
**W-5090 Leverkusen 3(DE)**

(54) **Stabilisierung von hochwärmeformbeständigem Polycarbonat.**

(57) Gegenstand der vorliegenden Erfindung sind hochwärmeformbeständige, aromatische Polycarbonate, die Siliciumverbindungen der Formel (II)

$(R)_a$-Si-$(OR')_b$ (II)

worin a + b = 4, b mindestens 1, vorzugsweise 3 oder 4 ist, R H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und R' $C_1$-$C_{18}$-Alkyl, $C_2$-$C_{18}$-Alkenyl, $C_5$-$C_{10}$-Cycloalkyl oder $C_7$-$C_{24}$-Aralkyl sind,
gegebenenfalls in Mischungen mit Oxetanen und/oder Epoxiden, enthalten, sowie ein Verfahren zu deren Herstellung und die Verwendung der Siliciumverbindungen der Formel (II) als Schlagzähmodifikatoren für hochwärmeformbeständige Polycarbonate, wobei der Gegenstand der älteren deutschen Patentanmeldung P 40 03 438.0 beziehungsweise der älteren europäischen Patentanmeldung Nr. 90 124 291.7 ausgeschlossen ist.

EP 0 507 178 A2

Gegenstand der vorliegenden Erfindung sind hochwärmeformbeständige, aromatische Polycarbonate mit Molekulargewichten $\overline{M}w$ (Gewichtsmittel) von mindestens 10.000, vorzugsweise von 10.000 bis 200.000 und insbesondere von 20.000 bis 80.000, die bifunktionelle Carbonatstruktureinheiten der Formel (Ia)

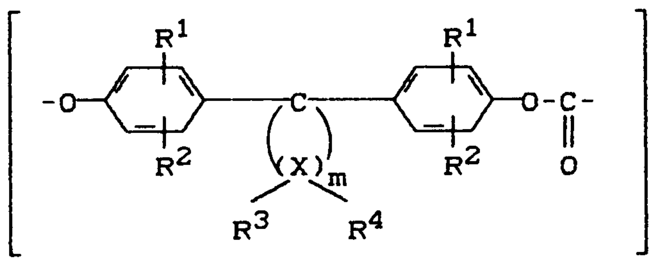

(Ia)

enthalten, worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$, | für jedes X individuell wählbar, unabhängig voneinander Wasserstoff, $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten, die 0,001 bis 1 Gew.-%, bevorzugt 0,01 bis 0,5 Gew.-% mindestens einer Siliciumverbindung der Formel (II)

$(R)_a$-Si-$(OR')_b$ (II)

worin a + b = 4, b mindestens 1, vorzugsweise 3 oder 4 ist, R H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und R' $C_1$-$C_{18}$-Alkyl, $C_2$-$C_{18}$-Alkenyl, $C_5$-$C_{10}$-Cycloalkyl oder $C_7$-$C_{24}$-Aralkyl sind,
gegebenenfalls in Mischungen mit Oxetanen und/oder Epoxiden, enthalten.

Die Siliciumverbindungen (II) können sowohl einzeln als auch im Gemisch miteinander eingesetzt werden.

In den Siliciumverbindungen der Formel (II) können die Alkyl- und/oder Alkenyl-Reste linear oder verzweigt sein und Oxiran- oder Oxetan-Gruppen enthalten.

Die C-Reste R und R' können beliebige, nicht basische, bei der thermoplastischen Verarbeitund der Polycarbonate thermisch stabile und inerte Substituenten enthalten wie beispielsweise Halogenatome wie Chlor oder Brom, $C_1$-$C_{18}$-Alkoxygruppen, $C_6$-$C_{24}$-Aryloxygruppen, heterocyclische Reste mit Sauerstoff, Schwefel und/oder nicht basischen Stickstoffatomen, Ketogruppen, Estergruppen, Nitrilgruppen, Ethergruppen und/oder Thioethergruppen.

Bevorzugte Reste R sind z.B.:

Methyl
Ethyl
Vinyl
Propyl
3-Chlorpropyl
3-Methacryloxypropyl
3-Glycidyloxypropyl
Butyl
Pentyl
Hexyl und
Cyclohexyl.

Bevorzugte Reste R' sind z.B.:

Butyl
Pentyl
Hexyl
Octyl
Stearyl
Decyl
Cyclohexyl
Methyl-cyclohexyl
2-Methoxy-ethyl
3-Methoxy-propyl
3-Ethoxy-propyl
3-(Thiomethyl)-propyl
(5-Ethyl-1,3-dioxanyl-5)-methyl und
2,3-Epoxy-propyl.

Zur Darstellung der Siliciumverbindungen der Formel (II) bieten sich hauptsächlich zwei Verfahren an:

1. Die Umsetzung von Siliciumhalogeniden mit Alkoholen nach dem Schema:

$$(R)_a\text{-Si-}Cl_b + b\ R'OH \rightarrow bHCl + (R)_a\text{-Si-}(OR')_b.$$

2. Die Umsetzung von Kieselsäureestern niedrigerer Alkohole mit den entsprechenden Alkoholen unter Abdestillation der freiwerdenden niedrigen Alkohole Ethanol, Methanol und nach dem Schema:

$$(R)_a\text{-Si-}(OR^*)_b + b\ R'OH \rightarrow R^*OH + (R)_a\text{-Si-}(OR')_b$$
$$R^* = CH_3, C_2H_5.$$

Die Darstellung nach diesen Methoden ist z.B. beschrieben bei: D. Ridge u.M. Todd, J. Chem. Soc. 1949, S. 2637-2640 oder V. Bavzant, V. Chvalovsky', J. Rathousky': Organosilicon Compounds, Bd. 1, S. 51-61, Academic Press, New York 1965.

Die Darstellung von Epoxiden, Oxetanen und Tetrahydrofuranen ist z.B. in Houben Weyl, "Methoden der organischen Chemie" Band VI, 3, Georg Thieme Verlag, Stuttgart 1965 auf den Seiten 366-434 (Epoxide), 488-508 (Oxetane) und 523-592 (Tetrahydrofurane) und in Houben Weyl "Methoden der organischen Chemie" Band VI, 4, Georg Thieme Verlag, Stuttgart 1966 auf den Seiten 411-430 (Dioxane), beschrieben.

Als erfindungsgemäß geeignete Siliciumverbindungen gemäß Formel (II) können z.B. Verwendung finden:

Tetrabutoxysilan
Tetrapentoxysilan
Tetrahexoxysilan
Tetraoctoxysilan
Tetradecoxysilan
Tetrastearoxysilan
Tetra-cyclohexoxysilan
Tetrakis-(methyl-cyclohexoxy)-silan
Methyl-tributoxysilan
Methyl-trihexoxysilan
Methyl-trioctoxysilan
Methyl-tridecoxysilan
Methyl-tristearoxysilan
Methyl-tri-cyclohexoxysilan
Methyl-tris-(methyl-cyclohexoxy)-silan
Vinyl-tributoxysilan
Vinyl-trihexoxysilan
Vinyl-trioctoxysilan
Vinyl-trihexoxysilan
Vinyl-tristearoxysilan
Vinyl-tricyclohexoxysilan
Vinyl-tris-(methyl-cyclohexoxy)-silan

Tributoxysilan
Trihexoxysilan
Trioctoxysilan
Tridecoxysilan
Tetrakis-(2-oxyethyl-ethoxy)-silan
Methyl-tris-(2-oxyethyl-ethoxy)-silan
Vinyl-tris-(2-oxyethyl-ethoxy)-silan
Vinyl-tris-(2-methoxy-ethoxy)-silan
Methyl-tris-(2-methoxy-ethoxy)-silan
3-Chlorpropyl-triethoxysilan
3-Chlorpropyl-tributoxysilan
3-Chlorpropyl-trihexoxysilan
3-Chlorpropyl-trioctoxysilan
3-Glycidylpropoxy-triethoxysilan
3-Glycidylpropoxy-tributoxysilan
3-Glycidylpropoxy-trihexoxysilan
3-Glycidylpropoxy-trioctoxysilan
Iso-butyl-tributoxysilan
Iso-butyl-trioctoxysilan
Tetrakis-(2-methoxyethoxy)-silan
3-Methacryloxypropyl-trimethoxysilan
Tetrakis-[(3-methyloxetanyl-3)-methoxy]-silan
Tetrakis-[(3-ethyloxetanyl-3)-methoxy]-silan
Tetrakis-[(3-amyloxetanyl-3)-methoxy]-silan
Tetrakis-[(5-ethyl-1,3-dioxanyl-5)-methoxy]-silan
Methyl-tris-[(5-ethyl-1,3-dioxanyl-5)-methoxy]-silan
Tetrakis-(2,3-epoxy-propoxy)-silan und
Methyl-tris-(2,3-epoxy-propoxy)-silan.

Geeignete Oxetan- oder Epoxidverbindungen, mit denen die Siliciumverbindungen der Formel (II) abgemischt werden können, sind folgende Verbindungen:

α)

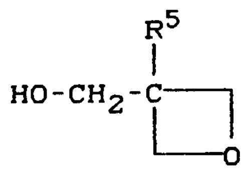

worin

$R^5$ Wasserstoff, Methyl, Ethyl, Pentyl, Hexadecyl, Octa decyl, Cyclohexyl, Phenyl, p-Tolyl, Benzyl, Methoxymethyl, Ethoxymethyl, Octadecyloxymethyl, Phenoxymethyl, p-Tolyloxymethyl, Benzyloxymethyl, Phenoxy, p-Chlorphenoxy, p-tert.-Butylphenoxy und Acetyloxymethyl ist,

β)

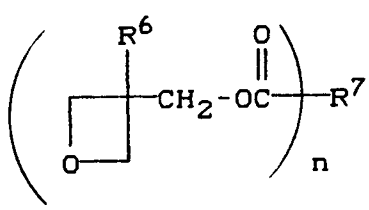

worin

$R^6$ $C_1$-$C_{16}$-Alkyl und $R^7$ entweder ein n-bindiges $C_2$-$C_8$-Alkan, das noch durch OH-Gruppen substituiert sein kann, wobei n eine Zahl von 1-6 ist oder ein 2-bindiges Cycloalkan, wobei n = 2 ist, sind und

γ) 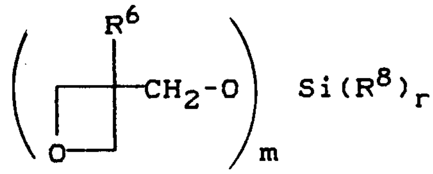

worin

$R^6$ $C_1$-$C_{16}$-Alkyl und $R^8$ $C_1$-$C_4$-Alkyl, das gegebenenfalls durch Cyan, Carboxy oder Acetoxy substituiert sein kann, Allyl, $C_6$-$C_{14}$-Aryl, das gegebenenfalls alkylsubstituiert ist, $C_7$-$C_{14}$-Aralkyl oder $C_1$-$C_4$-Alkoxy, das gegebenenfalls durch $C_1$-$C_4$-Alkoxy oder Allyloxy substituiert sein kann, m eine ganze Zahl von 1 bis 4 und r eine ganze Zahl von 0 bis 3, wobei m + r immer gleich 4 ist,

sowie epoxidgruppenhaltige Mischpolymere nach DOS 2 019 325, 3,4-Epoxycyclohexylmethyl-3,4-epoxycyclohexan-carboxylat und Bis-(3,4-epoxycyclohexyl)-adipat.

Die Polycarbonate auf Basis der Carbonatstruktureinheiten der Formel (Ia) sind aus den DE-OS 3 832 396 bekannt. Es sind Homopolycarbonate und Copolycarbonate die die Strukturen der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten, im Polycarbonat enthalten.

In der Formel (Ia) sind bevorzugt an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyldisubstitution in $\beta$-Stellung zu C-1 bevorzugt.

Insbesondere sind Struktureinheiten der Formel (Ia) die Reste von Dihydroxydiphenylcycloalkanen mit 5- und 6-Ring-C-Atomen im cycloaliphatischen Rest wie

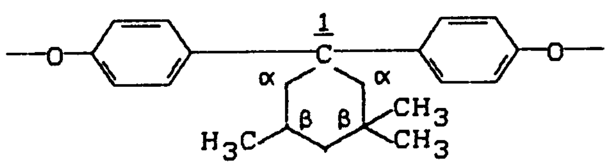

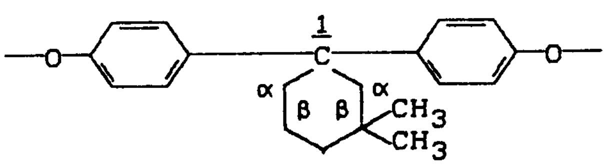

und

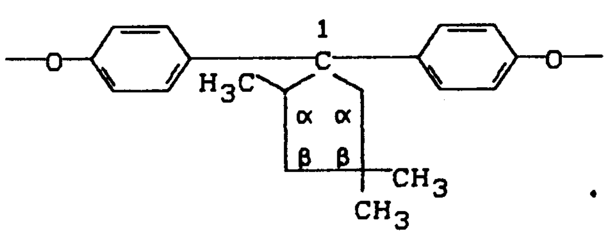

Diese Polycarbonate enthalten somit jeweils zu 100 Mol-% komplementäre Mengen an anderen difunktionellen Carbonatstuktureinheiten, beispielsweise solchen der Formel (Ib)

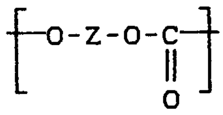

(Ib),

in denen

Z ein aromatischer Rest mit 6 - 30 C-Atomen ist,

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten, im Polycarbonat.

Bevorzugt sind Polycarbonate, in denen die Struktureinheiten der Formel (Ia) solche der Formel (Ic) sind

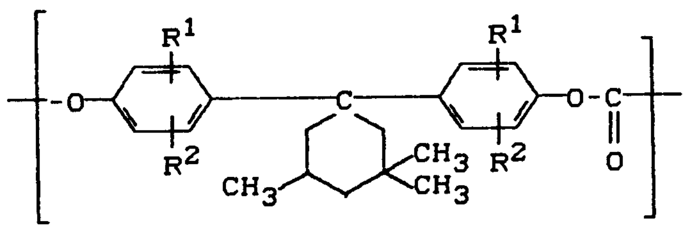

(Ic),

worin

$R^1$ und $R^2$ die für Formel (Ia) genannte Bedeutung haben, besonders bevorzugt aber Wasserstoff sind.

Die erfindungsgemäßen Mischungen sind gegen thermischen Abbau mit guter Langzeitwirkung stabilisiert und weisen dabei verbesserte Schlagzähigkeiten auf.

Gegenstand der vorliegenden Erfindung ist somit außerdem die Verwendung der Siliciumverbindungen der Formel (II) als Schlagzähmodifikatoren für hochwärmeformbeständige Polycarbonate auf Basis der Struktureinheiten der Formel (Ia).

Aus der DE-OS 29 20 450 (Le A 19 566) bzw. aus der entsprechenden US-PS 43 75 525 sind monomere Silane in den normalen Polycarbonaten auf Basis etwa von Bisphenol A bekannt. Die dort erhaltenen Ergebnisse zeigen keine Verbesserung der Schlagzähigkeiten während der Alterung an.

Aus der DE-OS 29 20 451 (Le A 19 567) ist der Zusatz derselben monomeren Silane in Kombination mit Oxetanverbindungen, Dioxanen oder Tetrahydrofuranen zum Stabilisieren von normalen Polycarbonaten bekannt. Auch hier werden keine Verbesserungen der Schlagzähigkeiten während der Alterung erzielt.

Aus der EP-PS 00 43 998 (Le A 20 430) sind Mischungen von Phosphinen mit oxetangruppenhaltigen Siliciumverbindungen bekannt. Sie dienen zur Stabilisierung von thermoplastischen Polycarbonaten. Solche auf Basis der Formel (Ia) sind nicht einbezogen.

Aus dem US-PS 44 56 717 (Le A 21 688) sind Mischungen von Phosphiten mit oxetangruppenhaltigen Siloxanen bekannt. Sie dienen ebenfalls zur Stabilisierung von Polycarbonaten. Auch hier sind solche auf Basis der Formel (Ia) nicht einbezogen.

Gegenstand der nicht vorveröffentlichten deutschen Patentanmeldung P 39 33 545.3 (Le A 27 209) vom 7.10.1989 sind Polycarbonate auf Basis der Diphenole der Formel (Ia) mit verschiedenen Additiven.

Der alleinige Zusatz von Siliciumverbindungen der Formel (II) als Stabilisatoren ist darin nicht aufgeführt.

Gegenstand der nicht vorveröffentlichten deutschen Patentanmeldung P 40 03 438.0 (Le A 27 502) vom 6.2.1990 bzw. der entsprechenden europäischen Patentanmeldung Nr. 90 124 291.7 vom 19.1.1991 sind hochwärmeformbeständige, aromatische Polycarbonate mit Molekulargewichten $\overline{M}w$ (Gewichtsmittel) von mindestens 10.000, vorzugsweise von 10.000 bis 200.000 und insbesondere von 20.000 bis 80.000, die bifunktionelle Carbonatstruktureinheiten der Formel (Ia)

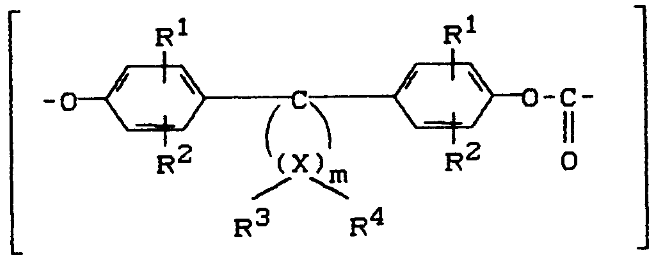

(Ia)

enthalten, worin

R[1] und R[2] unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

R[3] und R[4], für jedes X individuell wählbar, unabhängig voneinander Wasserstoff, $C_1$-$C_6$-Alkyl und

X Kohlenstoff bedeuten,

mit der Maßgabe, daß an mindestens einem Atom X R[3] und R[4] gleichzeitig Alkyl bedeuten, enthaltend als alleinigen Stabilisator 0,001 bis 1 Gew.-% eines Siloxans der Formel (IIa)

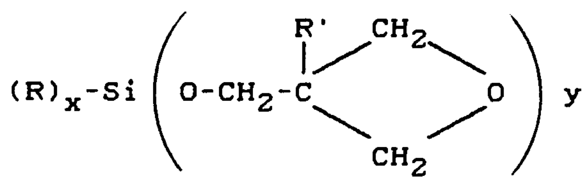

(IIa),

worin

R und R' unabhängig voneinander $C_1$-$C_4$-Alkyl oder Aryl und

x und y die Zahlen 1, 2 oder 3 bedeuten und x + y immer gleich 4 sind.

Die Verwendung der Verbindungen (IIa) als Schlagzähmodifikatoren für die hochwärmeformbeständigen Polycarbonate ist in diesen älteren Anmeldungen nicht angesprochen.

Der Gegenstand dieser älteren Anmeldungen wird hiermit ausgenommen.

Die Einarbeitung der Siliciumverbindungen der Formel (II) in die Polycarbonate, gegebenenfalls zusammen mit Oxetanen und/oder Epoxiden erfolgt in Knetern oder Extrudern.

In vielen Fällen können die Siliciumverbindungen der Formel (II) den genannten Polycarbonaten während der Herstellung oder auch schon den Ausgangsstoffen zugesetzt werden. Man kann die Siloxane auch den Lösungen der genannten Polycarbonate zugegeben und die Lösungsmittel dann abdampfen.

Gegenstand der vorliegenden Erfindung ist somit auch ein Verfahren zur Herstellung der erfindungsgemäßen Polycarbonate, das dadurch gekennzeichnet ist, daß man die Siliciumverbindungen der Formel (II) in die Polycarbonate über Kneter oder Extruder einarbeitet, oder den Ausgangsstoffen während der Herstellung der Polycarbonate zusetzt, oder Lösungen der Polycarbonate zugibt und das Lösungsmittel abdampft, wobei gegebenenfalls Oxetane und/oder Epoxide mit eingearbeitet werden und wobei Siloxane der Formel (IIa) ausgenommen sind.

Es ist möglich, den Polycarbonaten die üblichen Zusatzstoffe vor, während oder nach dem Herstellungsprozeß zuzumischen. Als Zusatzstoffe seien beispielsweise erwähnt: Entformungsmittel, Farbstoffe, anorg. Pigmente, UV-Absorber, Flammschutzmittel, andere Stabilisatoren, Füllstoffe wie Glasfasern, Graphit, Metallpulver etc.

Die Verarbeitung der erfindungsgemäß modifizierten Polycarbonate auf Basis der Struktureinheiten der Formel (Ia) erfolgt beispielsweise auf Extrudern oder Knetern oder aus Lösung zu Formkörpern verschiedenster Art; beispielsweise zu Lampenfassungen, Hohlkammerplatten, Leuchtengehäuse, Schreibgeräte, Wasserbehälter, Brillen, Babyflaschen, Folien.

Der Einsatz dieser Formkörper erfolgt beispielsweise im Elektrosektor sowie im Bausektor für Abdekkungen und Verglasungen, und zwar dann, wenn erhöhte Wärmeformbeständigkeit bei gleichzeitig guter Verarbeitbarkeit, also wenn komplizierte Bauteile hoher Wärmeformbeständigkeit verlangt werden.

## Beispiele

Untersucht wurde ein Copolycarbonat auf Basis von 1,1-Bis-(4-hydroxyphenyl)-3,3,5-trimethylcyclohexan und 2,2-(4-Hydroxyphenyl)-propan in den Molverhältnissen 36:65 mit einer relativen Lösungsviskosität von 1,295 (gemessen in Methylenchlorid bei 25 °C und einer Konzentration von 0,5 g/100 ml).

## Alterungsversuche

Die Normkleinstäbe aus Polycarbonat gemäß Versuch A-D wurden bei 150 °C einer Heißluftalterung unterzogen. Die Transmission wurde nach ASTM 1003, der Yellownessindex nach ASTM D 1925, die Schlagzähigkeit nach DIN 53 453 bestimmt.

## Erfindungsgemäße Versuche

Das obengenannte Polycarbonat enthielt als Additiv

A: 0,1 Gew.-% Methyl-tributoxysilan
B: 0,1 Gew.-% Methyl-tris-(2-ethylhexoxy)-silan
C: 0,1 Gew.-% γ-Glycidoxypropyltriethoxysilan

## Vergleich

D: Das Copolycarbonat enthielt kein Additiv. Es wurde einmal reextrudiert. Dadurch wurde sichergestellt, daß die gleichen Verarbeitungsschritte wie in A-C durchgeführt wurden.

Ergebnisse

| | A | B | C | D |
|---|---|---|---|---|
| % Transmission | | | | |
| 0 Std. | 88,9 | 89,0 | 89,9 | 87,8 |
| 250 | 87,7 | 87,9 | 87,9 | 86,2 |
| 500 | 86,0 | 86,9 | 86,5 | 84,9 |
| 750 | 83,8 | 85,7 | 84,9 | 83,1 |
| 1000 | 82,1 | 84,4 | 84,9 | 82,2 |
| 1250 | 80,7 | 83,5 | 83,4 | 81,1 |
| Y.I. | | | | |
| 0 Std. | 8,1 | 7,8 | 7,0 | 9,4 |
| 250 | 13,4 | 12,1 | 12,7 | 14,9 |
| 500 | 20,4 | 17,0 | 18,4 | 19,2 |
| 750 | 30,0 | 23,7 | 25,3 | 26,2 |
| 1000 | 36,8 | 28,5 | 22,8 | 30,2 |
| 1250 | 42,4 | 33,6 | 29,9 | 34,9 |
| % Trübung | | | | |
| 0 Std. | 2,0 | 1,5 | 1,4 | 2,2 |
| 250 | 2,3 | 1,8 | 2,6 | 4,0 |
| 500 | 2,8 | 2,3 | 3,3 | 4,8 |
| 750 | 2,9 | 2,7 | 4,0 | 5,6 |
| 1000 | 3,2 | 3,2 | 5,2 | 5,3 |
| 1250 | 3,6 | 2,6 | 5,0 | 5,8 |

| Schlagzähigkeit $a_n$ (kJ/m²) | n.g. | Rest | n.g. | Rest | n.g. | Rest | n.g. | Rest |
|---|---|---|---|---|---|---|---|---|
| 0 Std. | 10 | | 10 | | 10 | | 10 | |
| 250 | 2 | 170 | 8 | 154 | 8 | 213 | 2 | 193 |
| 500 | 4 | 159 | 5 | 173 | 7 | 160 | 4 | 174 |
| 750 | 2 | 163 | 6 | 144 | 6 | 121 | 5 | 77 |
| 1000 | 2 | 136 | 1 | 110 | 6 | 176 | | |
| 1250 | 2 | 129 | | 180 | 7 | 185 | 1 | 96 |

n.g. = nicht gebrochen
Rest = Restschlagzähigkeit

## Patentansprüche

1. Hochwärmeformbeständige, aromatische Polycarbonate mit Molekulargewichten $\overline{M}w$ (Gewichtsmittel) von mindestens 10.000, die bifunktionelle Carbonatstruktureinheiten der Formel (Ia)

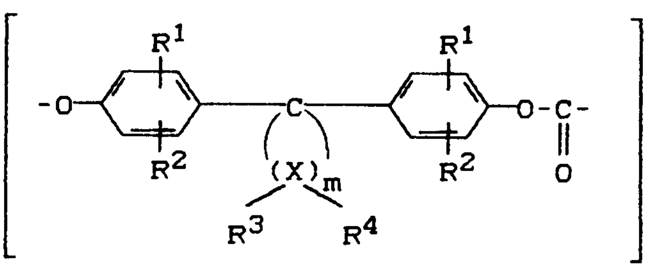

(Ia)

enthalten, worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, |
| $R^3$ und $R^4$, | für jedes X individuell wählbar, unabhängig voneinander Wasserstoff, $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten, die 0,001 bis 1 Gew.-% mindestens einer Siliciumverbindung der Formel (II)

$(R)_a$-Si-$(OR')_b$ (II)

worin a + b = 4, b mindestens 1 ist, R H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und R' $C_1$-$C_{18}$-Alkyl, $C_2$-$C_{18}$-Alkenyl, $C_5$-$C_{10}$-Cycloalkyl oder $C_7$-$C_{24}$-Aralkyl sind, wobei die Alkyl-Reste und/oder die Alkenyl-Reste linear oder verzweigt sein können und Oxiran- oder Oxetan-Gruppen enthalten können, wobei die Siloxane der Formel (IIa)

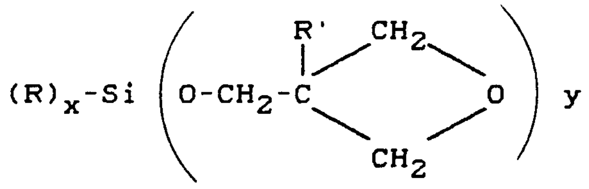 (IIa),

worin

R und R' unabhängig voneinander $C_1$-$C_4$-Alkyl oder Aryl und

x und y die Zahlen 1, 2 oder 3 bedeuten und x + y immer gleich 4 sind,

ausgenommen sind.

**2.** Polycarbonate gemäß Anspruch 1, dadurch gekennzeichnet, daß sie zusätzlich Oxetane und/oder Epoxide enthalten.

**3.** Verfahren zur Herstellung der Polycarbonate der Ansprüche 1 und 2, dadurch gekennzeichnet, daß man die Siliciumverbindungen der Formel (II) in die Polycarbonate über Kneter oder Extruder einarbeitet, oder den Ausgangsstoffen während der Herstellung der Polycarbonate zusetzt, oder Lösungen der Polycarbonate zugibt und das Lösungsmittel abdampft, wobei gegebenenfalls Oxetane und/oder Epoxide mit eingearbeitet werden und wobei Siloxane der Formel (IIa) ausgenommen sind.

**4.** Verwendung der Siliciumverbindungen der Formel (II) als Schlagzähmodifikatoren für hochwärmeformbeständige Polycarbonate auf Basis der Struktureinheiten der Formel (Ia).

**Patentanspruch für folgenden Vertragsstaat : ES**

**1.** Verfahren zur Herstellung von hochwärmeformbeständigen aromatischen Polycarbonaten mit Molekulargewichten $\overline{M}w$ (Gewichtsmittel) von mindestens 10.000, die bifunktionelle Carbonatstruktureinheiten der Formel (Ia)

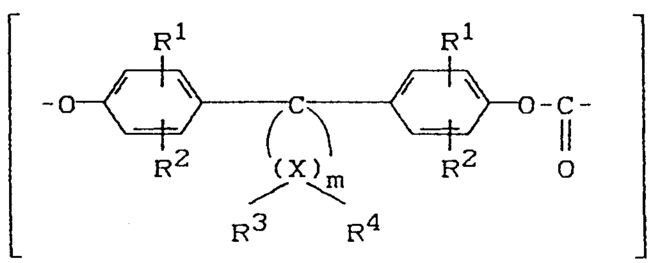 (Ia)

enthalten, worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$, für jedes X individuell wählbar, unabhängig voneinander Wasserstoff, $C_1$-$C_6$-Alkyl und

X Kohlenstoff bedeuten,

mit der Maßgabe, daß an mindestens einem Atom X $R^3$ und $R^4$ gleichzeitig Alkyl bedeuten,

die 0,001 bis 1 Gew.-% mindestens einer Siliciumverbindung der Formel (II)

$( R)_a$-Si-$(OR')_b$ (II)

worin a + b = 4, b mindestens 1 ist, R H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und R' $C_1$-$C_{18}$-Alkyl, $C_2$-$C_{18}$-Alkenyl, $C_5$-$C_{10}$-Cycloalkyl oder $C_7$-$C_{24}$-Aralkyl sind, wobei die Alkyl-Reste und/oder die Alkenyl-Reste linear oder verzweigt sein können und

Oxiran- oder Oxetan-Gruppen enthalten können, wobei die Siloxane der Formel (IIa)

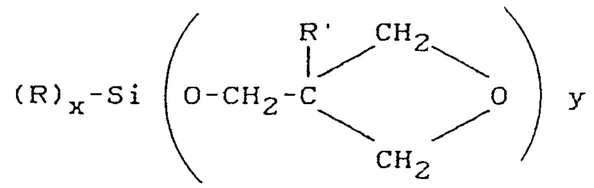 (IIa),

worin

R und R' unabhängig voneinander $C_1$-$C_4$-Alkyl oder Aryl und

x und y die Zahlen 1, 2 oder 3 bedeuten und x + y immer gleich 4 sind,

ausgenommen sind, und die gegebenenfalls zusätzlich Oxetane und/oder Epoxide enthalten, dadurch gekennzeichnet, daß man die Siliciumverbindungen der Formel (II) in die Polycarbonate über Kneter oder Extruder einarbeitet, oder den Ausgangsstoffen während der Herstellung der Polycarbonate zusetzt, oder Lösungen der Polycarbonate zugibt und das Lösungsmittel abdampft, wobei gegebenenfalls Oxetane und/oder Epoxide mit eingearbeitet werden und wobei Siloxane der Formel (IIa) ausgenommen sind.